(19) Europäisches Patentamt
European Patent Office
Office européen des brevets

(11) **EP 2 324 792 A1**

(12) **EUROPEAN PATENT APPLICATION**

(43) Date of publication:
25.05.2011 Bulletin 2011/21

(51) Int Cl.:
*A61C 5/06* (2006.01)  *B05C 17/01* (2006.01)
*B05C 17/005* (2006.01)

(21) Application number: **09176605.5**

(22) Date of filing: **20.11.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **3M Innovative Properties Company
Saint Paul, MN 55133-3427 (US)**

(72) Inventor: **Jelovac, Emir
80634, München (DE)**

(74) Representative: **Hohmann, Arno
3M ESPE AG
Office of Intellectual Property Counsel
Espe Platz
82229 Seefeld (DE)**

(54) **A device for dispensing a material**

(57) A device for dispensing a material comprises a piston for extruding the material. The device further has a spindle and a cooperating nut that are rotatable relative to each other to displace the piston axially to a rotation axis of the spindle. The device is adapted for rotationally driving the spindle and the nut individually. The invention is advantageous in that it helps in providing a relatively compact and inexpensive device.

FIG. 1

**Description**

Field of the Invention

The invention relates to a device for dispensing a dental material, and in particular to a spindle drive for moving a piston for extruding materials from the dispensing device.

Background Art

For preparation of dental materials in a dental practice dispensing devices are often used for automatic dispensing the materials from bulk containers. Such dispensing devices typically are used to prepare the materials in a relatively short time and at a desired quality. Further there are dispensing devices that allow for automatic mixing of components to form the dental material.

For example EP 1 010 401 A1 discloses a device for providing a dental multi-component compound. The device has pistons for advancing components from cartridges into a mixer. Further the device has a unit for controlling a motor which drives the pistons at different speeds.

WO 2007/121003 discloses a dispenser which is adapted for advancing and mixing a dental material, comprising a drive which is operated on a non-uniform drive speed profile. An advancing speed profile may be provided for advancing the components and/or a mixing speed profile may be provided for mixing the components.

Although there is a variety of devices on the market which provide for automatic mixing and dispensing there is still a desire to minimize costs for manufacturing of such devices and for providing the devices with maximized reliability.

Summary of the Invention

The invention relates to a device for dispensing a material, for example a dental material. The device comprises a piston for extruding the material. Further the device has a threaded spindle and a cooperating threaded nut that are rotatable relative to each other about a rotation axis. A rotation of the nut and the spindle relative to each other about the rotation axis preferably causes the spindle and the nut to displace axially along the rotation axis and further causes the piston to move. The device is adapted for rotationally driving the spindle and the nut individually.

The invention may be advantageous in that it allows a relatively simple and compact design of the device. In particular complex gear boxes may not be required. A design which is enabled by the invention may further help maximizing the use of standardized components as they may be available in the industry. For example a standard motor providing a standard rotation speed of for example 1500 1/min or 3000 1/min may be used in the device in combination with a transmission having no or only a few gears (for example 2 or 3). Further a spindle having a thread providing for a mechanical stability sufficient for extruding the material may be usable with the present invention. In particular a spindle having a relatively fine pitch (typically resulting in a relatively low mechanical stability of the thread) may be avoided. Further the invention may allow for adjusting the flow rate of the material dispensed without substantially affecting the mixing quality of the material. The invention may further be advantageous in that it may enable relatively slow or extremely slow extrusion speeds of the material. This may allow the dispensation relatively high viscous materials for example. The invention may further help minimizing friction in the drive for driving the piston and thus may help minimizing the power consumption of the device. Therefore the invention may allow for the use of relatively small and/or inexpensive motors.

In one embodiment the material may be provided in a container, for example one that can be exchanged or refilled in the device. The device may therefore have a receptacle for receiving the container, for example a receptacle allowing for the container to be replaced by another container. Further the container may have an outlet from which the material may be dispensed. Preferably the device is adapted such that the piston for extruding the material can be advanced in a direction toward the material. Further the device is preferably adapted such that the piston can be retracted from the material. This may allow for example removing the piston from the container so that the container can be refilled or replaced. Further retracting the piston from the material after dispensing may help avoiding afterflow of the material due to the piston maintaining a pressure to be applied on the material.

In one embodiment the spindle and the nut may in combination form a spindle drive being capable of converting a rotation in a generally linear displacement that is usable to advance and/or retract the piston. The spindle may have an outer thread and the nut may have a corresponding inner thread, so that the nut and the spindle threads can engage with each other. Further the spindle may form a hollow spindle having an inner thread and the nut may have a corresponding outer thread, so that the threads of the spindle the nut can engage with each other. The cross-sections of the spindle and the threads may be dimensioned such that the spindle can be loaded by axial forces of between about 4000 N and about 6500 N, for example. Further the threads of the spindle and the nut may have a pitch of about 2 mm to 5 mm, for example.

In another embodiment the device is adapted to drive, preferably to simultaneously drive, the spindle and the nut for rotating in the same direction. Further the device may be adapted to drive, preferably to simultaneously drive, the spindle and the nut for rotating in opposite directions. The device is preferably adapted to drive, preferably to simultaneously drive, the spindle and the nut at different rotations speeds. Therefore if the spindle and the nut are rotated in the same direction but at different rotational speeds an axial displacement of the spindle and the nut relative to one another is provided. Thereby the linear speed of the axial displacement depends on the difference of the rotational speeds. For example a fewer difference of the rotational speeds normally causes a fewer linear speed of the axial displacement, and a higher difference of the rotational speeds normally causes a higher linear speed of the axial displacement. If for example the individual rotation speeds are in a range of a couple of hundred revolutions per minute, but the difference of the rotational speeds approaches zero, a very slow axial displacement may be reached. On the other hand rotating the nut and the spindle in opposite directions at the same rotation speeds may provide for a rather rapid linear speed. Thus the invention may for provide for a very wide range of different linear speeds by use of the same mechanical configuration.

In another embodiment the device is adapted to temporarily stop one or both of the spindle and the nut from rotating. In contrast to some prior art spindle drives in which at least one of the spindle and the nut may be permanently prevented from rotation, for example mechanically fixed against rotation, the invention thus enables advantages of the invention to be used without loosing advantages that may be present in the prior art.

The spindle drive of the invention may have two general arrangements relative to the dispensing device. In a first arrangement the spindle may be axially stationary relative to the device with the nut being axially movable. For example the spindle may be guided in bearings at its ends so that it is rotatable, but the bearings may be fixed at the device so that the spindle is axially retained. In a second arrangement the spindle may be axially movable relative to the device with the nut being stationary. In the second arrangement the nut may be guided rotatably in a bearing which is fixed at the device so that the nut is retained from moving axially relative to the device. The spindle in this arrangement may be guided by the nut and axially free otherwise.

In one embodiment the device has a spindle drive member for rotationally driving the spindle. The spindle drive member and the spindle are preferably adapted such that the spindle drive member and the spindle are locked against rotation relative to each other but axially movable relative to one another. In a particular embodiment the spindle has a spline or U-shaped groove which extends in a direction generally axially to the rotation axis. The device further may have a key which is movable within the spline and locking the spindle drive member and the spindle against rotation relative to one another. The spindle drive member therefore may have a spline, and the key may be arranged such that it extends within the spindle spline and the spindle drive spline, thus engaging the spindle and the spindle drive member with one another. The key may further be part of the spindle drive member.

In a further embodiment the nut and the spindle drive member are axially coupled such that an axial movement of the nut and the spindle relative to one another causes the same axial movement of the spindle drive member and the spindle relative to one another. For example the nut and the spindle drive member may be arranged together in a drive unit that is axially movable relative to the spindle (or the spindle may be axially movable relative to the drive unit). The device may further have a first motor. The first motor may cooperate with the spindle drive member via a first transmission to rotationally drive the spindle. The device may further be adapted such that the first motor cooperates with the nut via a second transmission to rotationally drive the nut. Thus the device may be adapted such that the first motor drives the spindle and the nut via first and second transmissions respectively. Therefore in operation the spindle and the nut may rotate at a fixed rotation speed ratio relative to each other. In this embodiment the spindle and the nut are nevertheless drivable individually via first and second transmissions, respectively, although the first and second transmissions may be driven by the same motor. The first motor as well as the first and second transmissions may be part of the drive unit. Thus a relatively compact design may be achieved.

In another embodiment the device has a second motor cooperating with the nut via the second transmission to rotationally drive the nut. In this embodiment the spindle and the nut may be driven independently from one another by the first and second motors, respectively.

In one embodiment the first motor and/or the second motor are adapted for rotating in opposite directions. Further the first motor and/or the second motor may be adapted for rotating at different speeds, for example independent from one another at continuously adjustable rotation speeds. The first and/or second motors may be DC or AC motors, for example, and in particular may be variable speed motors.

In another embodiment the first and second transmissions have different transmission ratios. Preferably the transmission ratios may be selected such that the spindle and the nut rotate at a rotation speed ratio that is different from 1:1. Thus an axial displacement between the spindle and the nut may be provided also in case the transmissions are driven by the same motor.

In one embodiment the first and second transmissions comprise a gear transmission. Further at least one of the first and second transmissions may be a gear transmission. For example the first transmission may be formed by the spindle drive member, which in this case may be geared, and a motor drive gear of the first motor. The spindle drive member and the motor drive gear may directly engage with one another or via at least one intermediate gear. The second transmission may be formed by the nut, which in this case may also be geared, and a motor drive gear of the first or the second motor. The first motor may for example have a common drive gear for driving the first and second transmissions. Further at least one of the first and second transmissions may be a belt transmission, for example a toothed belt transmission. Accordingly the spindle drive member and/or the nut may form a pulley for cooperating with a drive pulley of the first and/or second motors. In another embodiment gear and belt transmissions may be combined to form the first and/or the second transmission. In particular the first or the second transmission may be a gear transmission, and the respective other on may be a belt transmission. The skilled person will recognize other types of transmission like for example a chain transmission, or a friction wheel transmission. Combinations may be possible.

In another embodiment at least one of the first and second transmissions forms a component of a planetary gear drive. In particular the nut may be geared and form a nut gear and the spindle drive member may form a spindle drive gear. The spindle drive gear and the nut gear may form sun gears of the planetary gear drive, and may cooperate or engage with first and second planetary gears, respectively. The first and second planetary gears may be rotatably arranged on a common planetary carrier. Thus the first and second planetary gears may rotate independently from one another about their rotation axis but may be only be movable simultaneously about the sun gears. Further the first and second planetary gears may cooperate or engage with one common outer wheel of the planetary gear. Preferably the first and second planetary gears have different numbers of teeth, and the nut gear and the spindle drive gear may have different numbers of teeth.

In one embodiment the device of the invention comprises a receptacle for receiving the material in the form of at least two material components. The material components may be provided in one container or in individual containers. For example the material components may be provided in individual foil bags which may be replaceably accommodated in cartridges. Further the components may be directly provided in separate chambers of a common cartridge. Accordingly the receptacle may be adapted to receive the foil bags and/or the cartridge. The container(s) may have at least one outlet through which the components may be delivered, for example into a mixer which may be connected to the outlet (s). The device may further comprise at least two pistons for advancing the components toward the at least one outlet to which the mixer is connectable.

In another embodiment the device of the invention has a mixer shaft for receiving and driving a mixer for mixing the components. The mixer shaft may for example form a first coupling which is shaped to engage with a second coupling in the mixer. Such a mixer may for example have a mixing chamber in which a mixing rotor comprising the second coupling may be arranged. The first and second couplings may for example comprise a plug and socket connection. The mixer may be adapted for continuously receiving components at mixer inlets, for mixing the components, and for continuously delivering the mixture toward a mixer nozzle.

In a further embodiment the device is adapted for driving the mixer shaft. Preferably a transmission is provided between the mixer shaft and at least one of the spindle and the nut. For example the mixer shaft may be directly coupled with the first motor or the second motor (if present). Thus the device may be adapted to drive the mixer shaft at the same rotation speed as the first or second motors. This may be advantageous in that a gear drive between the first or second motors and the drive shaft may be unnecessary. The invention thus may help minimizing the complexity and costs of the device. Further due to the transmission between the mixer shaft and at least one of the spindle and the nut the dispensing volume rate may be adjusted by adjusting the rotation speed of the motor without substantially changing the mixing quality of the material dispensed. This is because the rotation speed of the mixer shaft and thus of the mixing rotor of the mixer may change proportionally with the axial movement of the spindle or nut and thus pistons. As a result the device may provide a substantially constant mixing of the components because a certain number of rotations may be generally applied to the same amount of material independent of the rotation speed of the motor.

A further aspect of the invention is directed to a device for dispensing a dental material which comprises a piston for extruding the material. The device further has two threaded spindles and a cooperating gear. The gear and the two spindles may form a worm drive assembly. The spindles are rotatable about generally parallel spindle axes respectively and the gear is rotatable about a gear axis. The gear axis may be arranged generally perpendicular to the rotation axes. Further the gear is displaceable in a direction generally parallel to the rotation axes for moving the piston. The direction in which the gear is displaceable preferably corresponds to a direction generally lateral or perpendicular to the gear axis. The device is further adapted for rotationally driving the spindles individually.

In one embodiment the device is adapted to drive the spindles to rotate in the same direction and/or in opposite directions. The spindles may further have similar or generally equal threads, with similar or generally equal pitches. The device is preferably adapted to drive the spindles at different rotation speeds.

In another embodiment the spindles may have different pitches. This may allow the spindles to be rotated at generally the same rotation speed, but provide for a linear displacement of the gear. Therefore in this embodiment the device may be adapted to drive the spindles at generally the same rotation speeds.

Further embodiments may comprise features of a device with a spindle drive having a spindle and a nut as appropriate.

Brief Description of the Figures

Fig. 1    is a perspective view of a device for dispensing dental materials according to an embodiment of the invention;

Fig. 2    is a perspective view of a drive assembly for a device for dispensing dental materials according to an embodiment of the invention;

Fig. 3    is a schematic view of a principle configuration of a drive assembly according to an embodiment of the invention;

Fig. 4    is a schematic view of a another principle configuration of a drive assembly according to an embodiment of the invention;

Fig. 5    is a perspective detail view of the drive assembly shown in Fig. 2;

Fig. 6    is a perspective cross-sectional detail view of the drive assembly shown in Fig. 2;

Fig. 7    is a cross-sectional view of a drive assembly using a threaded hollow spindle according to an embodiment of the invention;

Fig. 8    is a cross-sectional view of a drive assembly using a spindle with an outer thread according to an embodiment of the invention;

Fig. 9    is a cross-sectional view of a drive assembly using a planetary gear drive according to an embodiment of the invention;

Fig. 10    is a cross-sectional view of a drive assembly using a belt transmission according to an embodiment of the invention;

Fig. 11    is a cross-sectional view of a drive assembly using a gear transmission according to an embodiment of the invention;

Fig. 12    is a cross-sectional view of a drive assembly combining a belt and a gear transmission according to an embodiment of the invention;

Fig. 13    is a cross-sectional view of a drive assembly using bevel gears according to an embodiment of the invention;

Fig. 13a    is a cross-sectional view of a drive assembly using bevel gears according to a further embodiment of the invention;

Fig. 14    is a cross-sectional view of a drive assembly comprising a relatively compact planetary gear drive according to an embodiment of the invention;

Fig. 15    is a cross-sectional view of a drive assembly for driving two pistons and a mixer shaft according to an embodiment of the invention; and

Fig. 16    is a schematic top view of a worm drive assembly according to a further embodiment of the invention.

Detailed Description of the Invention

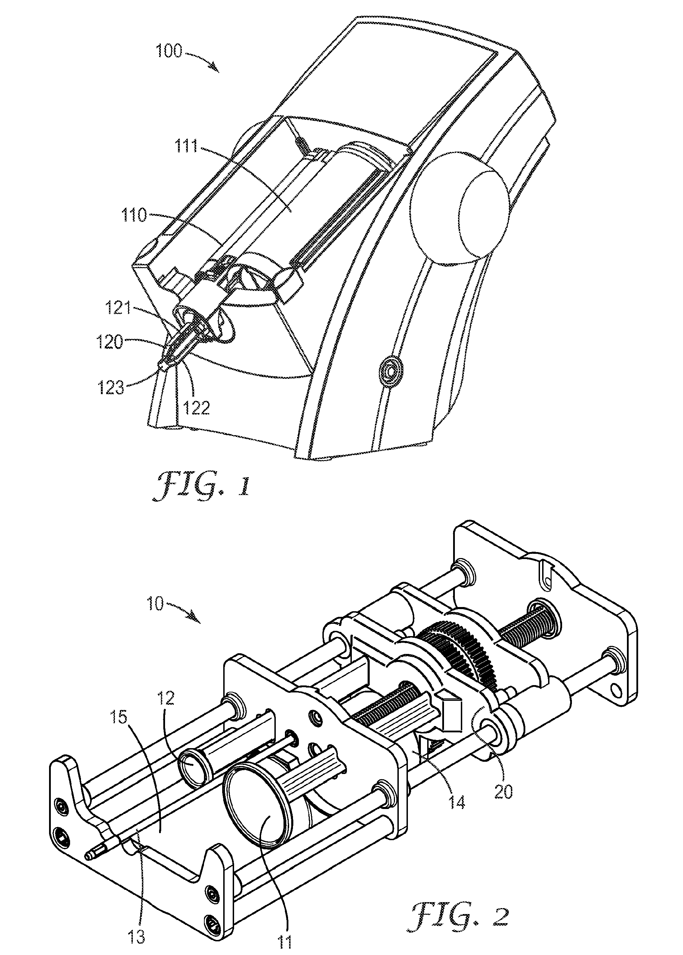

Fig. 1 shows a device 100 for mixing and dispensing dental materials. The device is motorized and therefore allows for automatic dispensation of the materials. A similar device is available under the designation 3M™ ESPE™ Pentamix™ from 3M ESPE AG, Germany. The device 100 holds two components of a dental material in containers 110, 111. A mixer 120 for mixing the two components is attached to the device 100. The mixer 120 has a mixing chamber formed between a rotatable mixing rotor 121 and a mixer housing 122. The mixer is connected with the containers 110, 111 such that the individual components can flow into the mixing chamber. The mixture can exit through an outlet 123 of the mixer 120. The device 100 is adapted to drive the mixing rotor 121 so as to mix the components in the mixing chamber. The device 100 implements a continuous dynamic mixing process in which components can be continuously supplied into the mixing chamber and in which the mixture from the components can be dispensed continuously from the mixer. Thus the device allows preparation for variable amounts of dental materials without the need of pre-determining amounts of initial components of the mixture. The components can be advanced toward the mixer 120 by a piston (not shown) of the device 100. Both the mixer and the piston can be driven by a motor, or individual motors, in the device 100.

The device shown may be used to mix and dispense a hardenable dental impression material, for example. The mixed material may be used to fill a dental tray which is then placed into a patient's mouth to take a dental impression. The mixer is attached replaceably at the device 100. Therefore when the mixed material hardens and thus blocks the mixer the used mixer may be replaced by an unused mixer for the next use of the device.

Fig. 2 shows a drive assembly 10 as it may be used with a device for dispensing materials, for example one as shown in Fig. 1. The drive assembly 10 comprises a spindle drive 20 according to one embodiment of the invention, which is further described in detail below. Components of the drive assembly 10 may be used in combination with other embodiments of spindle drives according to the invention as described in the following. In particular the spindle drive 10 comprises first and second pistons 11, 12. The pistons 11, 12 are adapted for exerting a force on the material to be extruded from the device. For example the pistons 11, 12 may be adapted for moving into respective material containers for extruding material from the containers. Further the drive assembly 10 has a mixer shaft 13 for driving a mixer for mixing the material. A motor 14 is arranged at the drive assembly 10 for driving the spindle drive 20. The same motor 14, or alternatively a further motor (not shown), may be used to drive the mixer shaft 13. The drive assembly 10 further provides a receptacle 15 for receiving containers (not shown) holding the materials to be dispensed. The spindle drive 10 cooperates with the pistons 11, 12 for moving the pistons 11, 12 relative to the receptacle 15.

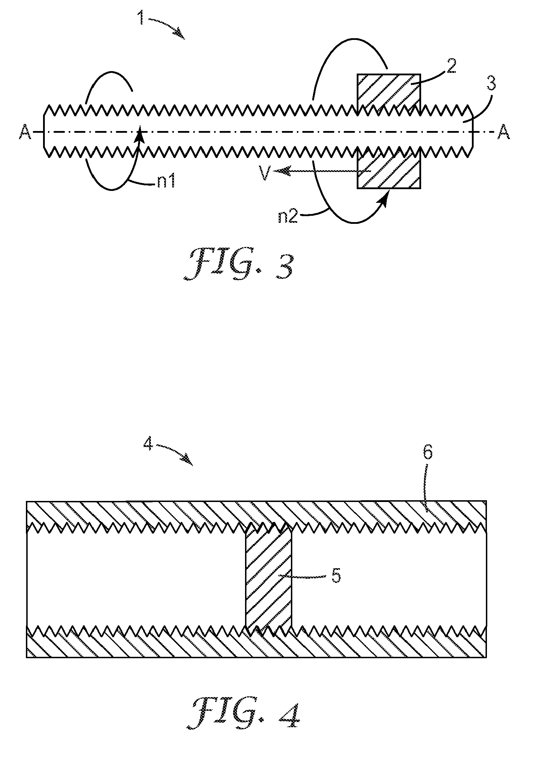

Fig. 3 illustrates the principle operation of the spindle drive according to the invention. Shown is a spindle drive 1 having a threaded spindle 3 and an appropriately threaded nut 2 engaged with the thread of the spindle 3. The spindle 3 as well as the nut 2 can be driven rotationally, for example by a motor (not shown). In the example shown the spindle 3 may be driven at a rotation speed $n_{spindle}$ (referred to as n1 in the Figure) and the nut 2 may be driven at a rotation speed $n_{nut}$ (referred to as n2 in the Figure). At least one or each of the rotation speeds $n_{spindle}$, $n_{nut}$ may be variable independent from the respective other speed. For better understanding only, the example is explained based on the assumption that the nut 2 is axially (in a dimension along a rotation axis A of the spindle) displaceable relative to the spindle 3, whereas the spindle 3 is axially stationary. However the skilled person will recognize that in other examples the spindle may be axially displaceable relative to an axially stationary nut. A rotation of the nut 2 relative to the spindle 3 causes the nut 2 to displace axially. Such a rotation of the nut 2 and the spindle 3 relative to each other is caused when the nut 2 and the spindle 3 are rotated at different speeds. Accordingly the nut 2 displaces axially at a certain linear speed v dependent on a difference of the rotation speeds $n_{spindle}$, $n_{nut}$. The linear speed of the nut may be calculated according to the equation $v = (n_{spindle} - n_{nut})*p$, wherein $p$ is the pitch of the spindle thread. In the following the axial displacement of the nut 2 relative to the spindle 3 is for the purpose of providing a better understanding described at certain rotation speed combinations $n_{spindle}$ versus $n_{nut}$ by way of example.

In one example the spindle 3 and the nut 2 both rotate in the same direction, but at different rotation speeds $n_{spindle}$ and $n_{nut}$. Therefore the nut rotates relative to the spindle and thus also displaces axially relative to the spindle. If the nut and the spindle rotate at almost the same speed, but still differentiate, the resulting linear speed of the axial displacement may be relatively slow although the pitch of the spindle and the rotation speeds $n_{spindle}$, $n_{nut}$ may be relatively high. Therefore the invention may allow for the use of a conventional motor rotating at a certain standardized speed and a conventional spindle having a standardized pitch. A slow linear speed of the axial displacement may otherwise only be achieved by providing a gear reduction reducing the rotation speed of a motor and/or by providing the spindle and the nut with a thread having a relatively fine pitch. Therefore the invention may make the use of a geared reduction unnecessary, or at least may allow the use of a less complex and thus more inexpensive geared reduction. Further the invention may provide for relatively high forces transmittable axially by the spindle drive because a less fine pitch of the thread may provide the spindle drive with increased mechanical stability under load.

In another example one of the spindle 3 and the nut 2 - although both being adapted to be rotated - does not rotate or is stopped from rotation. In contrast to a prior art spindle drive in which one of the spindle or the nut may be rotationally stationary (can not be driven for rotation), the spindle drive of the invention thus allows for axially displacing the nut in opposite directions by rotating either the spindle with the nut being stopped, or the nut with the spindle being stopped, in the same direction. Thereby a gear mechanism for reversing a motor rotation to provide an axial displacement in opposite directions may be made unnecessary.

In still another example the spindle 3 and the nut 2 both rotate, but in opposite directions. Therefore a fast axial displacement may be achieved. In this example one of rotation speeds is mathematically a negative rotation speed.

The table below summarizes the examples using exemplary rotation speeds $n_{spindle}$, $n_{nut}$ and a spindle having an exemplary pitch of about 3 mm. For better illustration only, a mathematically positive linear speed of an axial displacement is referred to as a forward displacement (for example a displacement of the pistons in a direction for dispensing material), and a mathematically negative linear speed is referred to as a backward displacement (for example a displacement for retracting the pistons from the material).

| n1<br>[1/min] | n2<br>[1/min] | equation<br>$(n_{spindle} - n_{nut}) * p$ | v<br>[mm/min] | result |
|---|---|---|---|---|
| 1500 | 1400 | (1500 - 1400) * 3 | 300 | slow forward displacement |
| 1500 | 0 | (1500 - 0) * 3 | 4500 | fast forward displacement |
| 0 | 1400 | (0-1400) * 3 | -4200 | fast backward displacement |

In this example each of the spindle and the nut are switchable between a fixed rotation speed and stopped rotation only. Although those limited operation options may normally limit the operation modes of the spindle drive, this exemplary spindle drive according to the invention may provide for an operation mode providing for a slow forward displacement as well as two operation modes providing for a fast displacement. Such a spindle drive may be relatively simple in construction. For example the spindle drive may comprise a motor for each of the spindle and the nut, and the motors may be adapted for being switched on, to rotate at the same standard speeds, or off, to stop rotation. Each of the motors may be coupled with the spindle and the nut respectively via different preferably simple reductions which provide for the different rotation speeds of the spindle and the nut.

Using motors which can be reversed in rotation may in such a configuration further provide two additional operation modes providing for a very fast displacement in opposite directions.

| 1500 | -1400 | (1500-(-1400)*3 | 8700 | very fast forward displacement |
| -1500 | 1400 | (-1500-1400)*3 | -8700 | very fast backward displacement |

Thus the spindle drive according to the invention may provide for an axial displacement at a wide range of linear speeds. Further the spindle drive may allow the use of a conventional motor and a spindle having a conventional pitch, preferably without use of complex gear reductions.

Fig. 4 shows another embodiment of a spindle drive 4 according to the invention. The spindle drive 4 has a threaded hollow spindle 6 in which an appropriately threaded nut 5 is arranged. The spindle 6 in this example has an inner thread which is in engagement with an outer thread of the nut 5. Thus the arrangements of the spindle and nut threads are reversed with respect to the configuration shown in Fig. 3. However the principle operation of the spindle drive 4 is similar to the operation of the spindle drive 1 illustrated in Fig. 3.

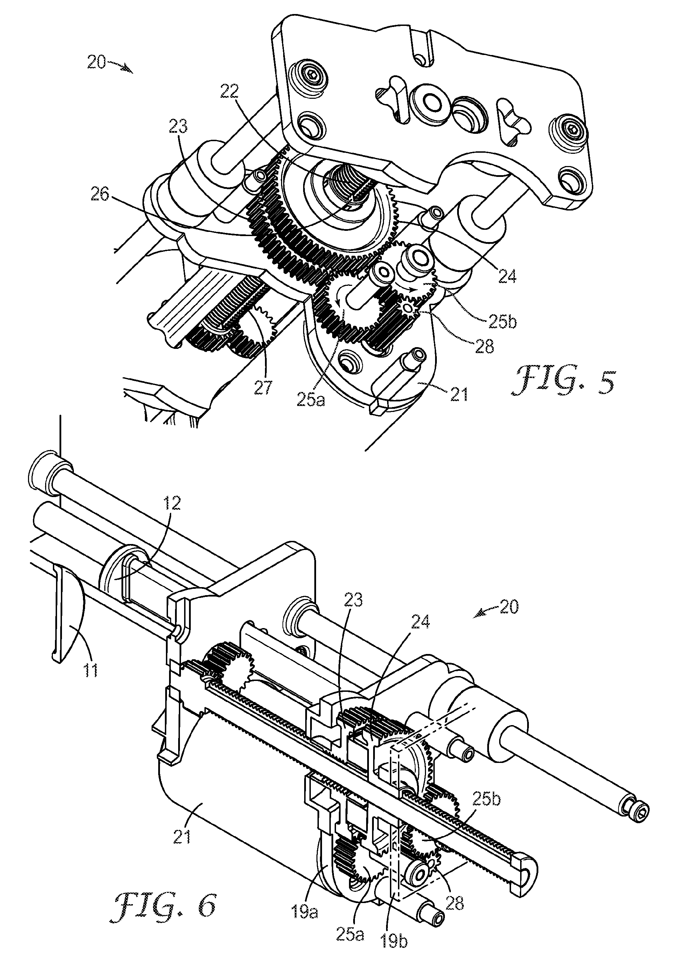

Fig. 5 shows the spindle drive 20 (see also Fig. 2) in more detail. The spindle drive has a motor 21, a threaded spindle 22, and an appropriately threaded nut 23 arranged on the spindle. Further the spindle drive 20 has a spindle drive gear 24 for driving the spindle 22. The spindle drive gear 24 and the spindle 22 are axially displaceable, but interlocked against rotation relative to each other. Thus a rotation of the spindle drive gear 24 causes the spindle 22 to rotate. In the example the spindle drive gear 24 therefore has a key 26 which engages an axial groove or spline in the spindle. Other configurations providing an equivalent anti-twist function are possible though. The nut 23 in the example is formed as a gear. The gear may be provided by the shape of the nut itself or be a separate component combined with the nut. Thus the spindle 22 (via the spindle drive gear) and the nut 23 (via the nut gear) may be driven via a geared connection. In the example the nut 23 and the drive gear 24 are both arranged in geared connection with the motor 21. The nut 23 has a reduced number of teeth relative to the spindle drive gear 24. Both the nut 23 and the spindle drive gear 24 are arranged in geared connection with a common motor gear 28 of the motor 21. To compensate for a difference in diameter of the nut 23 and the spindle drive gear 24 this geared connection is established via intermediate gears 25a, 25b both having the same number of teeth. Therefore a first transmission ratio is established via the common motor gear 28, the intermediate gear 25a, and the nut 23. Further a second transmission ratio is established via the common motor gear 28, the intermediate gear 25b, and the spindle drive gear 24. As a result, when the common motor gear 28 rotates, the nut 23 and the spindle drive gear 24 (along with the spindle 3) rotate in the same directions but at different rotation speeds relative to each other. Thus the nut 23 and the spindle displace axially relative to one another. In the example the nut 23 has 58 teeth, the spindle drive gear 24 has 60 teeth, and the common motor gear 28 has 10 teeth. If the motor 21 is driven at a speed of 3000 1/min the rotation speed of the intermediate gears 25a, 25b is:

$$3000 \text{ 1/min} * 10 \text{ teeth} / 28 \text{ teeth} = 1071 \text{ 1/min}.$$

Therefore the rotation speed of the nut 23 $n_{nut}$ is:

$$1071 \text{ 1/min} * 28 \text{ teeth} / 60 \text{ teeth} = \underline{500 \text{ 1/min}},$$

and the rotation speed of the spindle drive gear 24 (= rotation speed of the spindle 22) $\mathbf{n}_{spindle}$ is:

$$1071 \text{ 1/min} * 28 \text{ teeth} / 58 \text{ teeth} = \underline{517 \text{ 1/min}}$$

Thus the rotation speeds of the nut 23 and the spindle 22 differ by about 517 1/min - 500 1/min = 17 1/min. In the example the spindle thread has a pitch of 3 mm so that the nut displaces axially at a linear speed of 17 1/min * 3 mm = 51 mm/min. Therefore a relatively slow displacement of the nut may be achieved although a relative wide pitch of the spindle thread and a motor having a relatively high rotation speed are used. A prior art spindle drive using the same spindle thread of 3 mm would have to be driven at a rotational speed of $n_{spindle}$ = 17 1/min to achieve a similar linear speed of the nut 23. Accordingly a motor for driving such a prior art spindle and providing a rotation speed of 3000 1/min would require a gear reduction of 10 teeth to 1765 teeth, for example. Such a huge gear reduction however typically requires a relatively complex gear box, for example one including several smaller reductions. This however may be saved by the present invention. On the other hand a prior art spindle drive for achieving a linear speed of the nut of about 51 mm/min would need a thread having a pitch of about 0.1 mm, assumed it is driven at a rotation speed of about 500 1/min as provided by the geared connection of gears 28, 25b and 24. However a spindle having such fine thread may not have a sufficient mechanical stability for extruding a viscous material, like a dental material.

Fig. 6 is a cross-sectional view of the spindle drive 20. The nut 23 and the spindle drive gear 24 are arranged adjacent one another, and preferably axially coupled so that an axial displacement of the nut 23 causes the spindle drive gear 24 to also move axially. In the example the nut 23 and the spindle drive gear 24 are therefore restrained between interlinked first and second supports 19a, 19b. Therefore in a displacement of the nut 23 towards the spindle drive gear 24 the nut 23 pushes the spindle drive gear 24, and the drive gear pushes the support 19b. In contrast in a displacement of the nut 23 away from the spindle drive gear 24 the nut 23 pushes the first support 19a, and the second support 19b (pulled by the first support 19a) pushes the spindle drive gear 24 in the direction of the displacement of the nut 23. Thus the first and second supports 19a, 19b, the nut 23 and the spindle drive gear 24 together form a drive unit which is adapted to displace axially driven by the nut 23. The drive unit of the example further comprises the motor 21, the common motor gear 28, and the intermediate gears 25a, 25b and carries the pistons 11, 12. The spindle drive 20 of the example therefore has a motor driven drive unit which is adapted to displace axially relative to the spindle 22. The skilled person will appreciate that the drive unit may be arranged in a dispensing device stationary or displaceable with the spindle arranged axially displaceable or stationary, respectively.

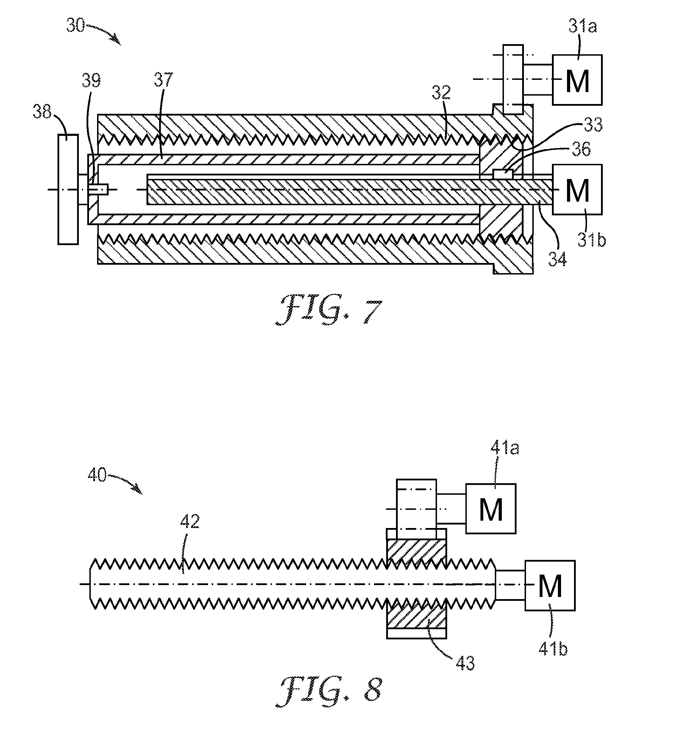

Fig. 7 shows a further spindle drive 30 having a motor 31 a for driving an inwardly threaded hollow spindle 32. A nut 33 is arranged within the spindle 32. The nut 33 is arranged on a splined shaft 34. A key 36 engaging the splined shaft 34 and the nut 33 provides for a lock of the nut 33 against rotation relative to the splined shaft 34, but permits axially movement of the nut 33 relative to the splined shaft 34. Therefore the nut 33 is drivable by the splined shaft 34 for rotation. A motor 31 b is arranged at the spindle drive for driving the splined shaft 34. Thereby the spindle drive 30 is adapted to drive both, the spindle 32 and the nut 33, for rotation. As described the spindle 32 and the nut 33 may be driven at different rotational speeds so that an axial displacement at different linear speeds between the spindle 32 and the nut 33 may be achieved. In particular this embodiment enables the spindle 32 and the nut 33 to be driven at different rotation speeds independently from one another. At least one or both of the motors 31 a, 31 b may for example be drivable at continuously variable speeds. Further one or both of the motors 31 a, 31 b may be drivable to rotate at opposing directions. Therefore the linear speed of the axial displacement between the spindle 32 and the nut 33 may be selected in both axial directions within a wide range as desired. In the example the motor 31 a is arranged in a geared connection with the spindle 32. The spindle 32 therefore has a gearing engaging with a gear at the motor 31 a. The spindle gear and the motor gear may provide for a 1:1 transmission not providing for any reduction. Although the arrangement using gears as shown may be implemented relatively easily, in another example the spindle may be driven directly, for example by a hollow shaft motor arranged at the outside of the spindle 32. Further other transmissions may be used as appropriate, for example a (toothed) belt transmission.

In the example the spindle 32 is arranged stationary, for example in a dispensing device (not shown), and the nut 33 is displaceable axially relative thereto. The nut 33 carries a piston 37 which is thus displaceable by the nut 33 axially. As indicated the piston 37 may be fixed to the nut 33 or formed as one piece with the nut 33. Therefore the piston may also rotate when the nut 33 rotates. A pressure plate 38 is arranged freely rotatable on the piston 37. The pressure plate 38 when used for dispensing material therefore may not rotate relative to the material, but relative to the piston. Friction and wear between a container containing the material to be dispensed and the pressure plate may thus be avoided.

Fig. 8 shows a spindle drive 40 that generally corresponds to the spindle drive shown in Figs. 5 and 6. However the spindle drive 40 has two motors 41 a, 41 b for individually driving a spindle 42 and a nut 43 in a similar way as shown in Fig. 7. Therefore this embodiment allows the spindle 42 and the nut 43 to be driven at different rotational speeds relative to one another. Thus the configuration of the embodiment shown in Fig. 8 may generally correspond to the configuration shown in Figs. 5 and 6, whereas the operation of the embodiment shown in Fig. 8 may generally correspond to the operation provided by the embodiment shown in Fig. 7. In particular the linear speed of the axial displacement between the spindle 42 and the nut 43 may be continuously variable, for example selected by a user at any appropriate speed. From this it is apparent that the invention may be implemented in many different ways, and that features of one embodiment may be used in other embodiments without departing from the invention.

Further embodiments of the invention are described in the following by way of example only.

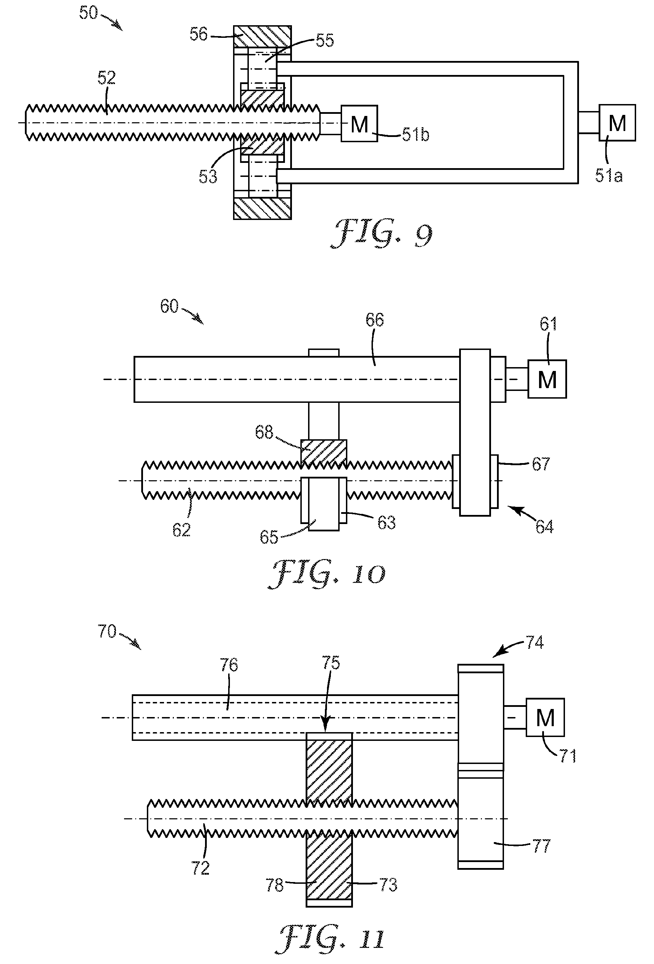

Fig. 9 shows a spindle drive 50 that is based on the configuration shown in Fig. 8. Therefore the spindle drive 50 has a threaded spindle 52 on which a nut 53 is arranged. The spindle 52 is drivable by a motor 51 b which in the example is directly coupled with the spindle 52. The nut 53 is drivable via a motor 51 a which in the example is coupled to planetary gears 55 of a planetary gear drive. The planetary gear drive has an outer gear wheel 56 that is preferably locked against rotation. Further the nut 53 forms a geared sun wheel of the planetary gear drive. The planetary gear drive as a whole and the spindle 42 may be axially displaceable relative to each other. In the example the planetary gear drive may be axially displaceable and the spindle may be stationary relative to a device in which the spindle drive 50 may be used. Thus a piston (not shown) may be driven axially via displacement of the planetary gear drive. For example the piston may be coupled with the (preferably non-rotating) outer gear wheel of the planetary gear drive.

The planetary gear drive may allow for a relatively compact design of a transmission that includes a reduction between the motor 51 a and the nut 53. Further the planetary gear drive may allow the two motors 51 a, 51 b to be arranged axially with the spindle 42 and relative to each other. Therefore relatively inexpensive standard motors, for example two similar ones, may be used.

Fig. 10 shows a spindle drive 60 in which a threaded spindle 62 and a nut 63 are driven at different rotational speeds. The spindle drive 60 has a first belt transmission 64 and a second belt transmission 65. The first and second belt transmissions 64, 65 have a common drive wheel 66 that is drivable by a motor 61. In particular the first belt transmission 64 has a spindle drive wheel 67, and the second belt transmission 65 has a nut drive wheel 68, wherein the spindle drive wheel 67 and the nut drive wheel 68 have different diameters. The common drive wheel in contrast has a uniform diameter. Thus the first and second belt transmissions 64, 64 have different transmission ratios for driving the spindle 62 and the nut 63 at different rotational speeds. Further this may also result in the two rotation speeds having a fixed speed ratio relative to one another. The belt transmissions 64, 65 further are arranged at the spindle drive 60 such that the spindle 62 and the nut 63 rotate in the same directions when the motor drives the common drive wheel 66. Therefore the spindle drive 60 is adapted such that the spindle 62 and the nut 63 displace axially relative to one another when the common drive wheel 66 is driven. The common drive wheel in the example is generally cylindrical allowing a flat belt to displace axially on the common drive wheel as the nut 63 displaces axially. However the skilled person will appreciate other configurations as appropriate, like for example a V-belt or toothed belt pulley arranged axially displaceable on the common drive wheel (which may in this case form a splined drive shaft rotationally locked with the pulley). A spindle drive using belt transmissions as shown may be relatively inexpensive, relatively robust and relatively durable.

Fig. 11 shows a spindle drive 70 having a threaded spindle 72 and a nut 73. Similar to the embodiment shown in Fig. 10 the spindle 72 and the nut 73 are driven at different rotational speeds with the rotational speeds having a fixed ratio relative to one another. The spindle drive 70 has first and second gear transmissions 74, 75. The first and second gear transmissions 74, 75 have an elongated common drive gear 76 that is drivable by a motor 71. Such an elongated drive gear may be available at relatively low costs as a standardized part within the industry. The common drive gear 76 engages a spindle drive gear 77 for driving the spindle, and further a nut drive gear 78 for driving the nut 73. In the example the nut and the nut drive gear are formed in one piece. The spindle drive gear 77 and nut drive gear 78 have different numbers of teeth. The common gear wheel in contrast has a uniform number of teeth. Thus the first and second gear transmissions 74, 74 have different transmission ratios for driving the spindle 72 and the nut 73 at different rotational speeds. The gear transmissions 74, 75 further are arranged at the spindle drive 70 such that the spindle 72 and the nut 73 rotate in the same directions when the motor 71 drives the common drive gear 76. Thereby the spindle 72 and the nut 73 displace axially relative to one another when the common drive gear 76 is driven. A spindle drive 70 as shown may provide for a precise fixed ratio between the rotation speeds of the spindle and the nut, and may further provide for relatively high transmission forces.

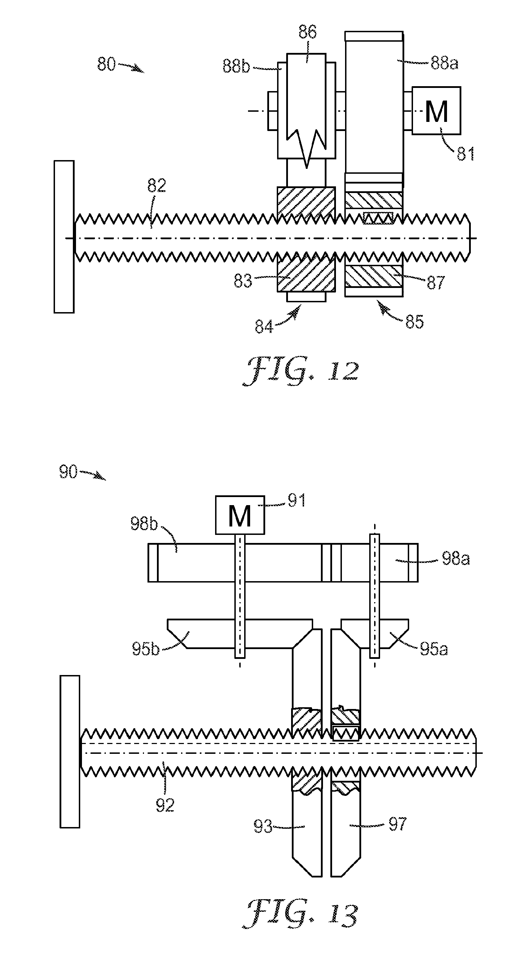

Fig. 12 shows a spindle drive 80 in which a belt transmission 84 and a gear transmission 85 are used in combination. The spindle drive 80 has a spindle 82 on which a spindle drive gear 87 of the gear transmission 85 is arranged. The spindle drive gear 87 is locked against rotation relative to the spindle 82, but is axially displaceable relative to the spindle 82. The drive gear 87 and a motor drive gear 88a of the gear transmission 87 are in engagement with one another. The motor drive gear 88a is coupled with a motor 81. Thus the spindle 82 may be driven for rotation by the motor 81 via the motor drive gear 88a and the spindle drive gear 87. Further the spindle drive 80 has a nut 83 having an inner thread engaging with an outer thread of the spindle 82. The nut 83 forms (or is connected to) a nut pulley 89 of the belt transmission 84. The nut pulley 89 is coupled to a motor pulley 88b of the belt transmission 84 via a belt 86. The motor pulley 88b further is coupled with the motor 81. Such a combination of a gear transmission and a belt transmission may be advantageous for driving the nut and the spindle in opposite directions. This is because the motor drive gear 88a and the spindle drive gear 87 normally rotate in opposite directions during operation, whereas the motor pulley 88b and the nut pulley 83 may rotate in the same direction during operation (for example if the belt surrounds both pulleys without crossing). However in a another embodiment the belt 86 may be arranged around the pulleys and crossing between (like an "8") such that the belt and the gear transmission provide for rotation of the nut 83 and the spindle 82 in the same direction during operation. In the embodiment shown the motor 81, the belt transmission 84, and the gear transmission 85 may be arranged stationary relative to a device for dispensing material, and the spindle 82 may be arranged axially movable thereto.

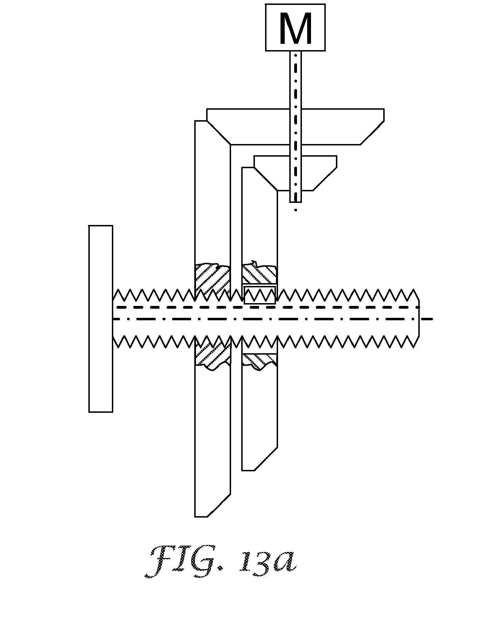

Fig. 13 shows a further spindle drive 90 having a threaded spindle 92 and an appropriate nut 93 for cooperating with the spindle 92. The nut 93 in this example forms a bevel gear. Further the spindle drive 90 has a bevel drive gear 97 which is locked against rotation relative to the spindle 92, but is axially displaceable relative to the spindle 92. The bevel drive gear 97 and the nut 93 cooperate with intermediate gears 95a, 95b respectively. Further the intermediate gears 95a, 95b are driven via engaging drive gears 98a, 98b respectively. A similar spindle drive is illustrated in Fig. 13a however with the bevel gears in an alternative arrangement. This may provide for a relatively compact design of the spindle drive.

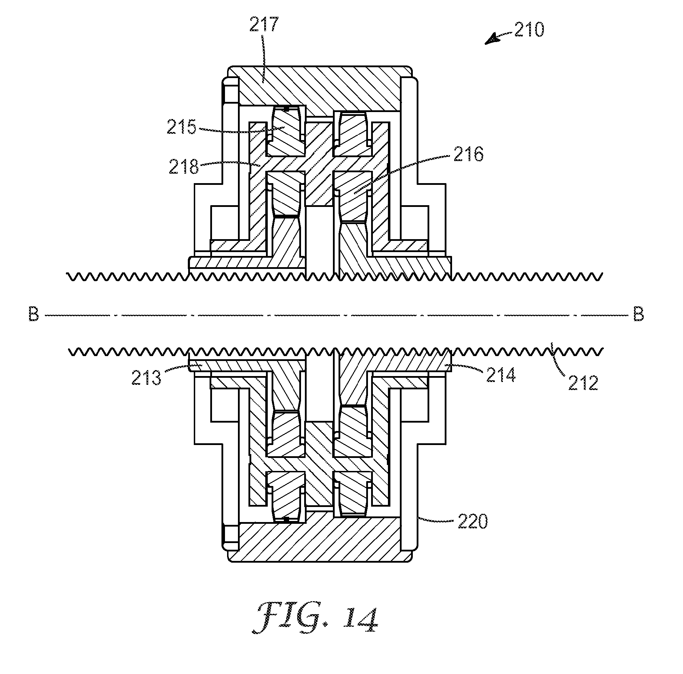

Fig. 14 shows a spindle drive 210 having a spindle 212 and a nut 213. The nut 213 forms a first sun wheel of a planetary gear drive 220. Further the spindle drive 210 has a spindle drive gear 214 which is locked against rotation relative to the spindle 212, but is axially displaceable relative to the spindle 212. The spindle drive gear 214 forms a second sun wheel of the planetary gear drive 220. The first and second sun wheels (213, 214) are in engagement with first and second planetary gears 215, 216 respectively, and the first and second planetary gears 215, 216 are both in engagement with a common outer gear wheel 217 of the planetary gear drive. The first and second planetary gears are rotatably arranged on a planet carrier 218 such that the first and second planetary gears can rotate about their rotation axis independently from one another but can only jointly move about the sun wheels. The outer gear wheel 217 is preferably locked against rotation. During an exemplary operation thus the spindle drive gear 214 may rotate the second planetary gear 216 which as a result rotates about its rotation axis and rolls between the spindle drive gear 214 and the outer gear wheel 217 and therefore moves around spindle axis B. The second planetary gear 216 by moving around the spindle axis B causes the planet carrier 218 and thus also the first planetary gear 215 to move around the spindle axis B. Thereby the first planetary gear is rotated between the outer gear wheel 217 and the nut 213 so that, in addition to the movement about the spindle axis, it rotates about its rotation axis and thus drives the nut 213. The spindle drive gear 214 in cooperation with the second planetary gear 216 has a transmission ratio which is different from the transmission ratio of the nut 213 in cooperation with the first planetary gear 215. Therefore driving the spindle drive gear 214 at a certain first speed causes the nut 213 to be driven at a different second speed. The nut 213 and thus also the planetary gear drive 220 thereby moves axially relative to the spindle. This embodiment may be relatively compact and may allow for the spindle drive 210 to provide for an extremely slow axial speed. The planetary gear drive may carry a piston for extruding the material form a container received in a dispensing device, and the spindle may be arranged stationary in this dispensing device. The skilled person will recognize that in another operation mode the nut may be driven instead of the spindle drive gear.

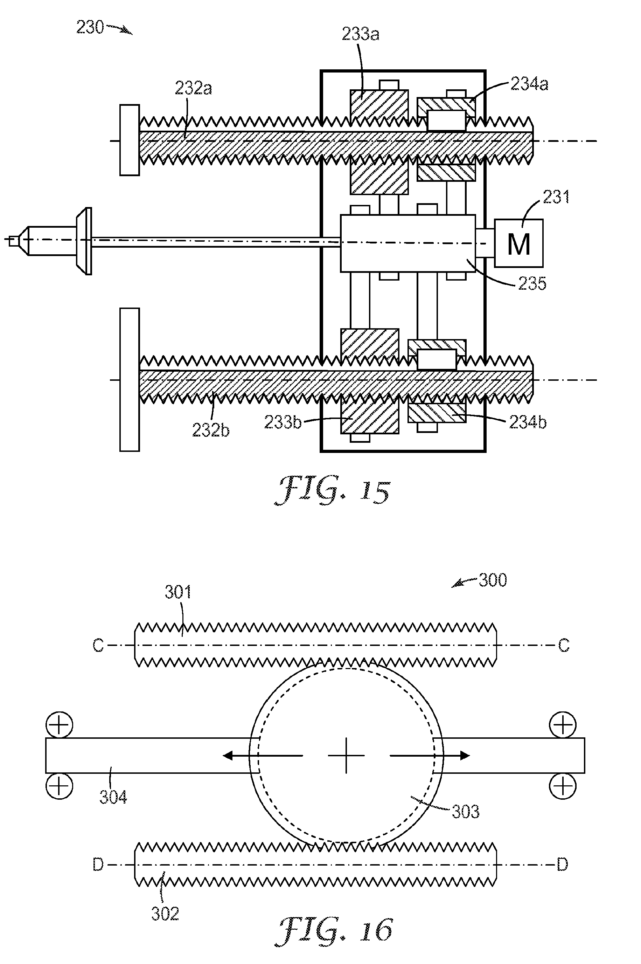

Fig. 15 shows a dual spindle drive 230 having first and second spindle drives 230a, 230b, first and second spindles 232a, 232b, first and second nuts 233a, 233b, and first and second spindle drive gears 234a, 234b. The configuration of the spindle drives 230a, 230b generally corresponds to the embodiment shown in Fig. 12, but each having two belt transmissions. The belts of the belt transmissions are drivable via a common pulley 235 which is coupled to a motor 231. The dual spindle drive 230 further has a mixer shaft for driving a mixer for mixing material. In the example the mixer shaft is attached to or part of the common pulley 235. Thus a single motor may drive the first and second spindle drives 230a, 230b as well as the mixer shaft. This may provide for a relatively inexpensive device and may also help minimizing the power consumption of a dispensing device. The skilled person will appreciate that the mixer shaft may further be coupled with the common pulley via a transmission, for example a geared transmission or a belt transmission. Further the skilled person will recognize that a gear transmission may in certain cases be used instead of a belt transmission.

Fig. 16 shows a worm drive assembly 300 having a first spindle 301 and a second spindle 302 that are both engaging with a gear 303 on opposite sides. The gear 303 is rotatably accommodated on a linear slide 304, and thus is arranged displaceable relative to the spindles 301, 302. The first and second spindles 301, 302 have preferably generally parallel rotation axes C and D respectively, and preferably the gear 303 is displaceable generally parallel to the rotation axes C and D. The spindles 301, 302 may have similar or generally equal threads and similar or generally equal pitches. The spindles 301, 302 further both may either have left-hand or right-hand threads. When the spindles 301, 302 are rotated in the same direction at the same rotation speed the gear 303 will rotate, but not displace linearly. However when the spindles rotate at different rotations speeds the gear 303 will displace linearly. This is because the spindles apply different peripheral speeds to the gear which is compensated by linear displacement. The displacement may be used to displace a piston of the device of the invention.

**Claims**

1. Device for dispensing a dental material, comprising a piston for extruding the material, the device having a threaded spindle and a cooperating threaded nut that are rotatable relative to each other about a rotation axis, wherein a rotation of the nut and the spindle relative to each other causes the spindle and the nut to displace axially along the rotation axis and to move the piston, and wherein the device is adapted for rotationally driving the spindle and the nut individually.

2. The device of claim 1, wherein the device is adapted to drive the spindle and the nut for rotating in the same direction and/or in opposite directions.

3. The device of claim 1 or 2, being adapted to drive the spindle and the nut at different rotations speeds.

4. The device of any of the preceding claims, being adapted to temporarily stop one or both of the spindle and the nut from rotating.

5. The device of any of the preceding claims, having a spindle drive member for rotationally driving the spindle, wherein the spindle drive member and the spindle are adapted such that the spindle drive member and the spindle are locked against rotation relative to each other but axially movable relative to one another.

6. The device of claim 5, wherein the spindle has a spline which extends in a direction generally axially to the rotation axis, and a key movable within the spline and locking the spindle drive member and the spindle against rotation relative to one another.

7. The device of claim 5 or 6, in which the nut and the spindle drive member are axially coupled such that an axial movement of the nut and the spindle relative to one another causes the same axial movement of the spindle drive member and the spindle relative to one another.

8. The device of any of the claims 5 to 7, having a first motor cooperating with the spindle drive member via a first transmission to rotationally drive the spindle.

9. The device of claim 8, being adapted such that the first motor cooperates with the nut via a second transmission to rotationally drive the nut.

10. The device of claim 8, having a second motor cooperating with the nut via a second transmission to rotationally drive the nut.

11. The device of any of the claims 8 to 9, wherein the first and second transmissions have different transmission ratios.

12. The device of any of the claims 9 to 11, in which the first and second transmissions comprise a gear transmission.

13. The device of claim 12, at least one of the first and second transmissions forms a component of a planetary gear drive.

14. The device of any of the preceding claims, comprising:

    - a receptacle for receiving the material in the form of two material components;
    - a mixer shaft for receiving and driving a mixer for mixing the components; and
    - at least two pistons for advancing the components toward at least one outlet to which the mixer is connectable.

15. The device of claim 14, being adapted for driving the mixer shaft, wherein a transmission is provided between the mixer shaft and at least one of the spindle and the nut.

FIG. 1

FIG. 2

*FIG. 3*

*FIG. 4*

FIG. 5

FIG. 6

*FIG. 7*

*FIG. 8*

*FIG. 9*

*FIG. 10*

*FIG. 11*

80 →

86

88b

88a

M

81

82

83

87

84

85

*FIG. 12*

90 →

M 91

98b

98a

95b

95a

92

93

97

*FIG. 13*

FIG. 13a

FIG. 14

230 →

232a 233a 234a

231

M

235

233b 234b

232b

*FIG. 15*

300

301

C — — C

304 303

D — — D

302

*FIG. 16*

Europäisches
Patentamt

European
Patent Office

Office européen
des brevets

# EUROPEAN SEARCH REPORT

Application Number

EP 09 17 6605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | DE 10 2008 036643 A1 (RENFERT GMBH [DE]) 11 February 2010 (2010-02-11) * paragraphs [0038] - [0044], [0054] * ----- | 1-15 | INV. A61C5/06 B05C17/01 B05C17/005 |
| A | EP 1 657 804 A1 (3M ESPE AG [DE]) 17 May 2006 (2006-05-17) * paragraphs [0009], [0067], [0069] * ----- | 1-4,14, 15 | |
| A | US 5 464 128 A (KELLER WILHELM A [CH]) 7 November 1995 (1995-11-07) * column 2, lines 23-39 * * column 3, lines 41-60; figures 1,2 * ----- | 1 | |
| A | DE 10 2005 017149 A1 (RENFERT GMBH [DE]) 26 October 2006 (2006-10-26) * paragraph [0027]; figure 1 * ----- | 1 | |
| | | | TECHNICAL FIELDS SEARCHED (IPC) |
| | | | A61C B05C |

The present search report has been drawn up for all claims

| Place of search | Date of completion of the search | Examiner |
|---|---|---|
| Munich | 22 April 2010 | Roche, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 17 6605

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2010

| Patent document cited in search report | | Publication date | Patent family member(s) | | Publication date |
|---|---|---|---|---|---|
| DE 102008036643 | A1 | 11-02-2010 | NONE | | |
| EP 1657804 | A1 | 17-05-2006 | AU | 2005303930 A1 | 18-05-2006 |
| | | | CA | 2586184 A1 | 18-05-2006 |
| | | | CN | 101099284 A | 02-01-2008 |
| | | | WO | 2006050911 A1 | 18-05-2006 |
| | | | JP | 2008518702 T | 05-06-2008 |
| | | | KR | 20070085909 A | 27-08-2007 |
| | | | US | 2009001096 A1 | 01-01-2009 |
| US 5464128 | A | 07-11-1995 | DE | 59301003 D1 | 04-01-1996 |
| | | | EP | 0591098 A1 | 06-04-1994 |
| | | | JP | 6296346 A | 21-10-1994 |
| DE 102005017149 | A1 | 26-10-2006 | NONE | | |

EPO FORM P0459

For more details about this annex : see Official Journal of the European Patent Office, No. 12/82

EP 2 324 792 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1010401 A1

- WO 2007121003 A